# EUROPEAN PATENT SPECIFICATION

(11) **EP 2 106 897 B1**
(45) Date of publication and mention of the grant of the patent: **16.05.2012**
(21) Application number: 08006889.3
(22) Date of filing: 04.04.2008
(51) Int. Cl.: B29C 47/12, B29C 49/00, F16L 11/11, F16L 11/112, F16L 11/115, F16L 11/15

(54) **Plastic pipe with profiled layer and method for manufacturing the same**
Kunststoffrohr mit Profilschicht und Verfahren zur dessen Herstellung
Tuyau en plastique doté d'une couche profilée et son procédé de fabrication

(43) Date of publication of application: 07.10.2009
(73) Proprietor: Wavin B.V., 8011 CW Zwolle (NL)
(72) Inventor: Banczyk, Leszek, Poznan, 61-663 (PL); Kanters, Arnoldus Franciscus Cornelis, 7701 Mr Dedemsvaart (NL)
(74) Representative: HOFFMANN EITLE

(56) References cited:
- EP-A- 0 882 925
- EP-A- 1 260 748
- DE-B3-102004 005 307
- GB-A- 1 471 692
- US-A- 3 058 493
- US-A- 4 357 190

## Description

The invention relates to a plastic pipe comprising a profiled layer with circumferentially extending profiles such as corrugations or ribs.

Such pipes are known, for instance from WO 2006/004393. Generally, the profiled layer serves to enhance certain mechanical properties of the pipe, such as its radial stiffness, while keeping its weight per meter at a minimum.

GB 1471692 describes a pipe having tensile strength properties which are obtained by providing the pipe wall with two diametrically opposed thickened portions lying between thinner-walled corrugated portions and extending longitudinally parallel to the pipe axis. Each thickened portion in the wall of the pipe, preferably takes the form of a whole or partial filling of the external and internal corrugation depression.

US 3,058,493 describes a hose comprising an interiorly and exteriorly corrugated wall portion. The exterior corrugations are defined by solid ridges and intervening valleys. The hose is made from suitable plastic material, preferably elastomeric material. The wall portion has embedded in the solid ridges of the hose circumferential reinforcement means, such as, for example, a helical wire spring which is substantially entirely covered by said plastic material, and also is provided with a multitude of longitudinally extending circumferentially spaced individual cords. The individual cords are disposed within (beneath) the helical reinforcing wire spaced at substantial radial distance inwardly therefrom and spaced somewhat above the inner surface of the interior valleys. It is further of importance that the cords traverse the corrugations close to the outer surface of the hose adjacent the exterior valleys thereof and that the undulations of the cords be maintained at a minimum so that they may be placed in stress when axial loads are applied to the hose, rather than merely straightening out as would be the case if they followed paths of substantial undulation.

Notwithstanding the improvements already achieved in this area, there exists a continuous need to further improve pipes of the aforementioned type. It is an object of the present invention to meet this need.

To that end, a pipe according to the invention is provided with at least one reinforcement band, extending in a generally longitudinal direction of the pipe, thereby following the contour of successive profiles.

In this description the wording 'longitudinal direction' is meant to encompass the axial direction of the pipe and all directions including an acute angle therewith.

The or each reinforcement band according to the invention extends along the profiled layer in a continuous run, uninterrupted by the circumferential profiles. Thanks to such continuous run, said band(s) can contribute to the pipe's bending stiffness, i.e. its resistance against bending forces. This is for instance advantageous during handling and/or installation of the pipe.

The band(s) may furthermore reinforce the respective profiles in radial direction, which may enhance the pipe's ring stiffness and/or ring flexibility. The ring stiffness is a measure for the pipe's resistance to ring deflection under a predetermined external force. The ring flexibility is the pipe's ability to resist diametric deflection without the loss of structural integrity. Both characteristics may for instance be advantageous for the pipe's ability to resist soil and traffic loads, during and after installation.

Alternatively, the reinforcement band(s) may be used to reduce the thickness of the profiled layer and with that the pipe's weight per meter. Normally, such reduction would affect the pipe's mechanical properties. This effect can be neutralized by the reinforcement band(s).

The or each reinforcement band may be made of a different material than the profiled layer. Alternatively, the material of the profiled layer may be locally reinforced with suitable additives, such as chemicals and/or structural components, e.g. fibres, threads or the like, so as to form a reinforcement band. Alternatively, the reinforcement band(s) may be made of the same material as the profiled layer. In such case, the band may for instance be shaped as a rib or ridge. The radial height of such ribs does not need to be large. Accordingly, the amount of additional material needed to realize such ribs need not be large. Such rib or ridge shaped band may be readily manufactured, for instance through integral extrusion with the profiled layer. The cross section of the ribs may for instance be rectangular, semi-circular or semi-elliptic. Of course, a profiled layer according to the invention may also be provided with a combination of the aforementioned reinforcement bands, for instance rib shaped reinforcement bands and reinforcement bands, produced by locally reinforcing the layer material with suitable additives.

An additional advantage of the rib shaped reinforcement band is that they may mitigate so called 'out of straightness' problems, wherein the pipe is not straight in unloaded condition. This phenomenon is caused by uneven shrinkage of the pipe, which in turn is caused by variations in the pipe's wall thickness. Such thickness variations typically range from about 0.2 mm to about 0.4 mm. The variations may for instance arise when an extruder head is combined with an eccentric mandrel. The extruded tubular layer may then end up having an axial segment with a relatively large wall thickness and a diametrically opposed segment with a relatively small wall thickness. During cooling down of the pipe, the thicker segment will shrink more than the thinner segment, causing the pipe to warp. This out of straightness problem especially shows in pipes with relatively small outer diameters, for instance up to about 250 mm, as such pipes generally feature a relatively small wall thickness, for instance of around 2 mm. Consequently, the impact of aforementioned thickness variations will be larger.

These out of straightness effects may be counteracted by one or more strategically disposed rib shaped reinforcement bands. Thanks to their superior thickness, these bands will shrink more than the surrounding layer thereby keeping the layer and consequently the pipe straight. To that end the reinforcement bands may for instance be applied in pairs, at diametrically opposed positions or otherwise symmetrically distributed positions (symmetrical with respect to the pipe's centre line).

According to a further aspect of the invention the or each reinforcement band may extend against an inner side of the profiled layer. Such a band can be readily hidden from sight. Moreover, the band(s) can be manufactured at conventional, i.e. existing extrusion and profiling equipment. Only the extrusion head will need some adaptation to allow the or each band to be extruded simultaneously with the layer. The profiling equipment may remain unchanged. Thus the present invention can be readily implemented in existing machinery.

According to another aspect of the invention, the or each reinforcement band may be located near a split line in the profiled layer. In this description, the wording 'split line' is reserved for all irregularities or the like imperfections which may arise in the profiled layer there where neighbouring die blocks do not adjoin each other perfectly. Such split lines may weaken the layer locally and thus affect the pipe's mechanical properties. This effect may be reduced or overcome by providing the layer with a reinforcement band according to the invention, near or at said split lines.

The invention furthermore relates to a method for manufacturing a plastic pipe according to the invention, wherein a tubular layer is provided with one or more reinforcement bands prior to being subjected to a profiling step for providing the layer with circumferentially extending profiles. Thanks to such method, the reinforcement bands will be profiled together with the layer so as to extend along said profiles in a continuous, uninterrupted way. As such, the bands can contribute to the pipe's bending stiffness, ring stiffness and/or ring flexibility. The method moreover allows for the reinforcement band(s) to be made in a simple way, for instance by extrusion, preferably simultaneously with the tubular layer.

Further advantageous embodiments of a pipe according to the invention and a method for the manufacturing thereof are set forth in the dependent claims.

To explain the invention, exemplary embodiments thereof will hereinafter be described with reference to the accompanying drawings, wherein:

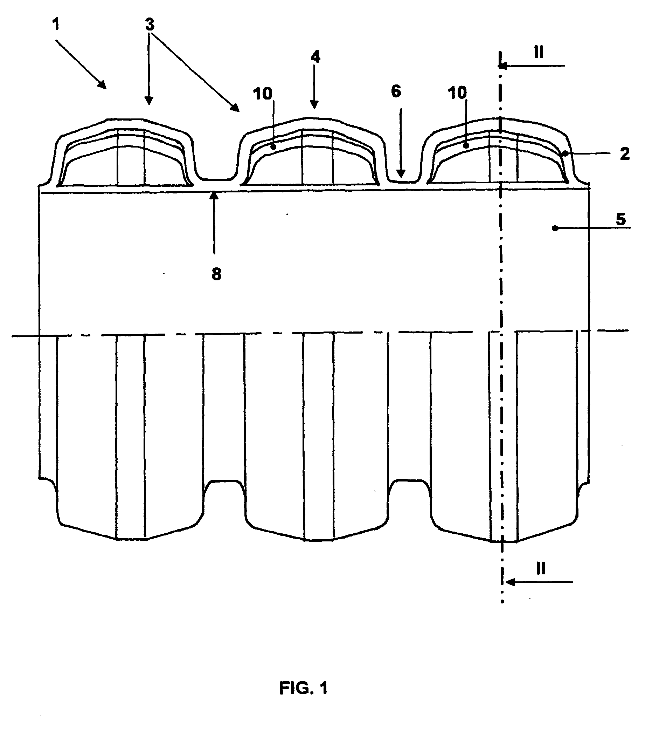

FIG. 1 shows, in partial longitudinal cross section, a section of a pipe according to the invention, having a profiled layer with reinforcement bands; and

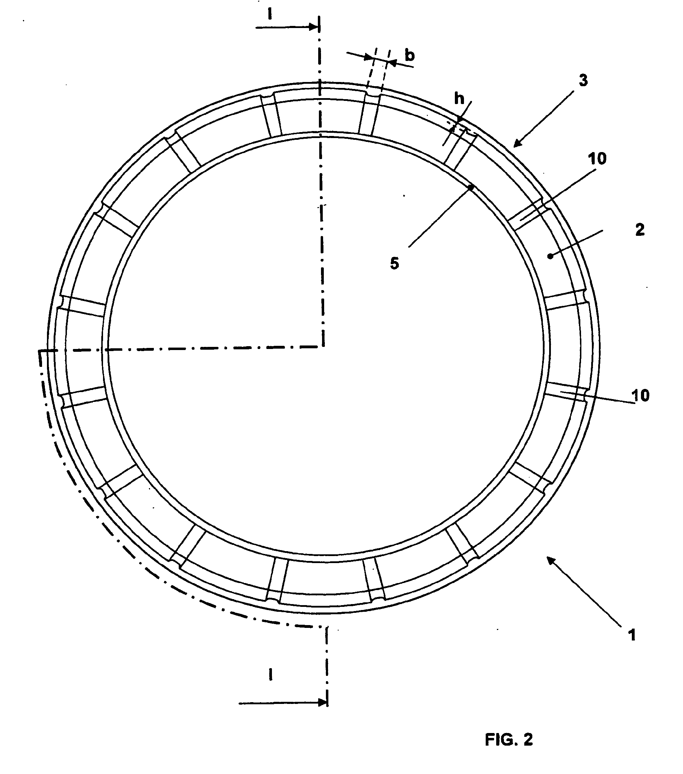

FIG. 2 shows the pipe of Figure 1 in cross sectional view along line II-II in Figure 1.

The illustrated pipe section 1 comprises a profiled layer 2 with circumferentially extending corrugations 3, featuring crests 4 and troughs 6. The pipe 1 may furthermore comprise a substantially smooth inner layer 5 (as shown) which may be joined to the profiled layer 2 at its troughs 6 (as indicated by reference numeral 8). Alternatively or additionally, the pipe 1 may comprise a substantially smooth outer layer (not shown) which may be joined to the profiled layer 2 at its crests 4. Such inner and/or outer layer may protect the profiled layer 2 against dirt accumulation and may furthermore enhance the pipe's 1 overall stiffness. The layers may be made of a polymer, more particular a thermoplastic polymer, such as for instance PVC or a polyolefin, such as for instance PP (polypropylene) or HDPE (high density polyethylene). The layers may all be made from the same material. Alternatively, different grades of polymer can be used for different layers to improve specific mechanical properties and/or to reduce costs. For these reasons it is also possible to add specific chemicals to the layer material, such as for instance a nucleation agent, mineral filler(s) and/or impact modifiers.

By way of non limiting example, the illustrated pipe 1 is provided with sixteen reinforcement bands 10, extending along the profiled layer 2 in a generally axial direction. The illustrated bands 10 are evenly distributed around the profiled layer's 2 inner circumference, at diametrically opposed positions. Such symmetric arrangement is not necessary, but may for instance be beneficial to reduce the pipe's out of straightness, as explained above. Of course, in alternative embodiments, the number of reinforcement bands 10, their shape and/or their position may be varied. The cross section of the reinforcement bands 10 may for instance be trapezoidal and/or have rounded corners. Their longitudinal direction may for instance include an acute angle with the axial direction of the pipe 1 so as to spiral along the surface of the profiled layer 2. Also, the reinforcement bands 10 may extend against an outer surface of the profiled layer 2 or against both its inner and its outer surface.

In the illustrated embodiment, the reinforcement bands 10 are shaped as ribs, with a width b and a thickness h. These ribs may be made of the same material as the profiled layer 2 and in such case may be integrally formed with said layer 2, for instance by means of extrusion. Alternatively, the ribs 10 may be made as separate members, possibly of a different material, and subsequently be adhered to the profiled layer 2 for instance through coextrusion.

Reinforcement bands 10 according to the invention may alternatively be created by locally providing the profiled layer 2 with reinforcing additives, such as chemicals and/or structural elements, such as threads, fibres, or the like. Of course, combinations of the aforementioned reinforcement techniques are also feasible.

The afore-described profiled layer 2 can be manufactured as follows. First a tubular layer is extruded. Next, this tubular layer is passed through a multipart mould for impressing the layer with circumferentially extending profiles. To that end, the mould includes a number of recessed die blocks which are arranged to surround the layer's circumference. The die blocks are furthermore arranged to move along with the layer in axial direction, over a limited range. The mould may furthermore comprise means to force the extruded layer into said recesses, for instance by applying a suitable differential pressure. The resulting profiled layer 2 may subsequently be fitted around an inner layer 5 and/or fitted into an outer layer, which can be bonded at dedicated parts of the profiled layer 2 by for instance the application of heat and/or pressure. The respective layers may be extruded separately from one another. Alternatively, the profiled layer and the inner and/or outer layer may be extruded simultaneously, on a specially adapted extrusion head, and after the profiling of the profiled layer 2 be bonded to one another, as described before.

As mentioned above, the reinforcement bands 10 according to the invention may be integrally formed with the layer during its extrusion. To that end, a mandrel of the extrusion equipment may be provided with suitable grooves, so as to form rib shaped reinforcement bands against an inner surface of the extruded layer. Alternatively, the extrusion equipment may be provided with one or more additional extrusion heads for separate extrusion of the reinforcement bands 10, preferably simultaneously with the layer. Such arrangement allows the reinforcement bands to be made of a different material. Also, the extrusion head may be provided with one or more injection nozzles, arranged to locally inject the layer 2 with reinforcement additives during its extrusion so as to form reinforcement bands 10 therein. Alternatively, the or each reinforcement band 10 may be manufactured as separate element, which can be adhered to the extruded layer prior to it being fed to the mould.

It is also possible to provide an outer surface of the profiled layer 2 with rib shaped reinforcement bands (not shown). Such reinforcement bands may be created simultaneously with the circumferential profiles, by providing the multipart mould, more particularly the recessed die blocks with suitable grooves.

Regardless of the manufacturing method used, it may be beneficial to align the reinforcement bands 10 with partition lines in the multipart mould that is where respective die blocks adjoin each other. Due to such partition lines, the profiled layer 2 may feature split lines where the layer is locally thinner or has burs or the like imperfections. Such split lines may affect the layer's mechanical properties. This effect may be mitigated by having the reinforcement bands 10 at least partly overlap said split lines.

The invention is not in any way limited to the exemplary embodiments presented in the description and drawing. Moreover, many variations are possible within the scope of the invention, as outlined by the claims.

## Claims

1. Plastic pipe (1) comprising at least a profiled layer (2) with circumferentially extending profiles (3), such as corrugations or ribs, wherein said profiled layer (2) is provided with at least one reinforcement band (10), extending in a continuous run in a longitudinal direction of the pipe (1), along successive profiles (3), uninterrupted by the circumferential profile (3), thereby following the contour of successive profiles (3).

2. Pipe (1) according to claim 1, wherein the at least one reinforcement band (10) is made of the same material as the profiled layer (2).

3. Pipe (1) according to claim 1 or 2, wherein the at least one reinforcement band (10) is shaped as a rib or ridge.

4. Pipe (1) according to anyone of the preceding claims, wherein the at least one reinforcement band (10) extends against an inner side of the profiled layer (2).

5. Pipe (1) according to anyone of the preceding claims, wherein the at least one reinforcement band (10) is located near a split line in the profiled layer (2), produced during formation of the profiles (3).

6. Pipe (1) according to anyone of the preceding claims, furthermore comprising an inner tubular layer (5) and/or an outer tubular layer, joined with the profiled tubular layer (2) at mutual contact areas.

7. Pipe (1) according to anyone of the preceding claims, wherein reinforcement bands (10) are spaced at regular intervals along the circumference of the profiled layer (2).

8. Method of manufacturing a plastic pipe (1), comprising the steps of:
a. providing a tubular layer,
b. providing said tubular layer with at least one reinforcement band (10), extending in a continuous run in a substantially longitudinal direction of the tubular layer;
c. providing the tubular layer with circumferentially extending profiles (3), wherein the reinforcement band (10) extends along successive profiles (3), uninterrupted by the circumferential profiles, thereby following the contour of successive profiles (3).

9. Method according to claim 8, wherein step a and b are performed by extrusion.

10. Method according to claim 8 or 9, wherein steps a and b are performed in one extrusion step.

11. Method according to anyone of claims 8 -10, further comprising the step of providing the tubular layer with a substantially smooth inner tubular layer (5).

12. Method according to claim 11, wherein the inner tubular layer (5) is extruded together with step a and b.

## Patentansprüche

1. Plastikrohr (1) mit zumindest einer Profilschicht (2) mit sich umfangsmäßig erstreckenden Profilen (3), wie zum Beispiel Riffelungen oder Rippen, wobei die Profilschicht (2) mit zumindest einem Verstärkungsband (10) versehen ist, das sich in einem durchgängigen Umlauf in eine Längsrichtung des Rohrs (1) erstreckt, und zwar entlang nachfolgender Profile (3), ununterbrochen durch das Umfangsprofil (3), wodurch der Kontur von nachfolgenden Profilen (3) gefolgt wird.

2. Rohr (1) nach Anspruch 1, bei dem das zumindest eine Verstärkungsband (10) aus dem gleichen Material wie die Profilschicht (2) besteht.

3. Rohr (1) nach Anspruch 1 oder 2, bei dem das zumindest eine Verstärkungsband (10) wie eine Rippe oder eine Erhöhung geformt ist.

4. Rohr (1) nach einem der vorhergehenden Ansprüche, bei dem sich das zumindest eine Verstärkungsband (10) gegen eine innere Seite der Profilschicht (2) erstreckt.

5. Rohr (1) nach einem der vorhergehenden Ansprüche, bei dem das zumindest eine Verstärkungsband (10) nahe einer Aufteilungslinie in der Profilschicht (2) angeordnet ist, die während der Ausbildung der Profile (3) erzeugt wird.

6. Rohr (1) nach einem der vorhergehenden Ansprüche, ferner mit einer inneren rohrförmigen Schicht (5) und/oder einer äußeren rohrförmigen Schicht, die mit der rohrförmigen Profilschicht (2) an gegenseitigen Kontaktbereichen verbunden sind/ist.

7. Rohr (1) nach einem der vorhergehenden Ansprüche, bei dem Verstärkungsbänder (10) in regelmäßigen Abständen entlang des Umfangs der Profilschicht (2) beabstandet sind.

8. Verfahren zum Herstellen eines Plastikrohrs (10) mit den folgenden Schritten:
a. Schaffen einer rohrförmigen Schicht,
b. Schaffen der rohrförmigen Schicht mit zumindest einem Verstärkungsband (10), das sich in einem durchgängigen Umlauf in einer im Wesentlichen Längsrichtung der rohrförmigen Schicht erstreckt;
c. Schaffen der rohrförmigen Schicht mit sich umfangsmäßig erstreckenden Profilen (3), wobei sich das Verstärkungsband (10) entlang nachfolgender Profile (3) erstreckt, und zwar ununterbrochen durch die Umfangsprofile, wodurch der Kontur von nachfolgenden Profilen (3) gefolgt wird.

9. Verfahren nach Anspruch 8, bei dem Schritt a und b durch Extrusion durchgeführt werden.

10. Verfahren nach Anspruch 8 oder 9, bei dem Schritte a und b in einem Extrusionsschritt durchgeführt werden.

11. Verfahren nach einem der Ansprüche 8 bis 10, ferner mit dem Schritt von Schaffen der rohrförmigen Schicht mit einer im Wesentlichen ebenen inneren rohrförmigen Schicht (5).

12. Verfahren nach Anspruch 11, bei dem die innere rohrförmige Schicht (5) zusammen mit Schritt a und b extrudiert wird.

## Revendications

1. Tuyau en plastique (1) comprenant au moins une couche profilée (2) avec des profils (3) qui s'étendent de manière circonférentielle, tel que des ondulations ou des nervures, dans lequel ladite couche profilée (2) est dotée d'au moins une bande de renfort (10), qui s'étend dans un passage continu en suivant une direction longitudinale du tuyau (1), le long de profils successifs (3), ininterrompus par le profil circonférentiel (3), suivant ainsi le contour des profils successifs (3).

2. Tuyau (1) selon la revendication 1, dans lequel l'au moins bande de renfort (10) est réalisée dans le même matériau que celui de la couche profilée (2).

3. Tuyau (1) selon la revendication 1 ou 2, dans lequel l'au moins bande de renfort (10) a la forme d'une nervure ou d'une arête.

4. Tuyau (1) selon l'une quelconque des revendications précédentes, dans lequel l'au moins bande de renfort (10) s'étend contre un côté interne de la couche profilée (2).

5. Tuyau (1) selon l'une quelconque des revendications précédentes, dans lequel l'au moins bande de renfort (10) est située à proximité d'une ligne de séparation dans la couche profilée (2), produite pendant la formation des profils (3).

6. Tuyau (1) selon l'une quelconque des revendications précédentes, comprenant en outre une couche tubulaire interne (5) et/ou une couche tubulaire externe, reliée(s) à la couche tubulaire profilée (2) à des zones de contact mutuel.

7. Tuyau (1) selon l'une quelconque des revendications précédentes, dans lequel les bandes de renfort (10) sont espacées à des intervalles réguliers le long de la circonférence de la couche profilée (2).

8. Procédé de fabrication d'un tuyau en plastique (1), comprenant les étapes qui consistent à :
a. fournir une couche tubulaire,
b. doter ladite couche tubulaire d'au moins une bande de renfort (10), qui s'étend dans un passage continu en suivant une direction essentiellement longitudinale de la couche tubulaire ;
c. doter la couche tubulaire de profils (3) s'étendant de manière circonférentielle, dans lesquels la bande de renfort (10) s'étend le long des profils successifs (3), ininterrompus par les profils circonférentiels, suivant ainsi le contour des profils successifs (3).

9. Procédé selon la revendication 8, dans lequel les étapes a et b sont réalisées par extrusion.

10. Procédé selon la revendication 8 ou 9, dans lequel les étapes a et b sont réalisées en une seule étape d'extrusion.

11. Procédé selon l'une quelconque des revendications 8 à 10, comprenant en outre l'étape qui consiste à doter la couche tubulaire d'une couche tubulaire interne essentiellement lisse (5).

12. Procédé selon la revendication 11, dans lequel la couche tubulaire interne (5) est extrudée simultanément aux étapes a et b.
